# DEMANDE DE BREVET EUROPEEN

(11) **EP 4 387 295 A1**
(43) Date de publication de la demande: **19.06.2024**
(21) Numéro de dépôt: 23210659.1
(22) Date de dépôt: 17.11.2023
(51) Int. Cl.: H04W 8/20

(54) **MISE A JOUR DE PROFIL DANS UNE CARTE EUICC**

(30) Priorité: 16.12.2022 FR 2213627
(71) Demandeur: IDEMIA France, 92400 Courbevoie (FR)
(72) Inventeur: DUMOULIN, Jérôme, 92400 COURBEVOIE (FR); DOS SANTOS, Elder, 92400 COURBEVOIE (FR); WOZNIAK, Tomasz, 92400 COURBEVOIE (FR)
(74) Mandataire: Idemia

(57) **Abrégé**

L'invention concerne la mise à jour de profils d'abonné au sein d'eUICCs dans le cadre des procédures standardisées SGP.02 et SGP.22. Le terminal hôte de l'eUICC ou cette dernière reçoit (20), d'un serveur SM-DP, un package de profil partiel comportant des éléments de profil de mise à jour pour un profil cible. L'eUICC traite (22) le package de profil partiel pour mettre à jour les éléments de profil au sein dudit profil. Selon l'invention, le package de profil partiel est reçu du serveur SM-DP via une fonction de mise à jour d'éléments de profil distincte de la fonction LoadProfileElements de SGP.22 et de la fonction DownloadAndInstallation de SGP.02. Par exemple, les commandes ou segments TLV contenant les éléments de profil au sein du package de profil lié peuvent présenter un type différent de '86' (réservé pour les fonctions classiques ci-dessus), typiquement '90'.

## Description

### DOMAINE DE L'INVENTION

La présente invention concerne la gestion de profils d'abonné au sein d'éléments sécurisés, tels des eUICC (pour embedded UICC - ou UICC intégrée).

### CONTEXTE DE L'INVENTION

Un terminal utilisateur sans fil, tel un téléphone portable, comporte traditionnellement un élément sécurisé utilisé pour s'authentifier sur le ou les réseaux de communication, typiquement de téléphonie mobile. De tels éléments sécurisés incluent les cartes de circuit intégré universelles UICC (pour « Universal Integrated Circuit Card »), notamment les cartes SIM (pour « Subscriber Identity Module » - ou module d'identité d'abonné), et leur version intégrée connue sous l'appellation eUICC (pour embedded UICC - ou UICC intégrée) aussi appelée eSIM. Un module eUICC est un élément matériel sécurisé, généralement de petite taille, pouvant être intégré dans un terminal mobile hôte afin de mettre en oeuvre les fonctions d'une carte SIM traditionnelle.

Les eUICCs peuvent comprendre plusieurs abonnements ou profils correspondant chacun à un opérateur différent. Chaque profil comprend des données de souscription, par exemple un identifiant IMSI (pour « International Mobile Subscriber Identity »), des clés cryptographiques et des algorithmes, spécifiques à un abonnement fourni par un opérateur de téléphonie mobile.

Les cartes eUICC offrent une plus grande flexibilité dans la gestion des abonnements, et notamment dans la fourniture et la gestion à distance des profils. Les cartes eUICC sont en effet reprogrammables et permettent donc, dans le temps, de charger, supprimer et mettre à jour plusieurs profils d'abonné (ou profils de communication) au sein de la même carte eUICC. Chaque profil d'abonné est contenu dans un conteneur sécurisé (noté ISD-P pour « Issuer Security Domain Profile » qui ne peut contenir qu'un seul profil) qui contient, comme une carte SIM classique, les données permettant, lorsque le profil est actif, de s'authentifier auprès d'un réseau correspondant de téléphonie mobile pour accéder à un service (par exemple de voix ou de données).

En changeant le profil d'abonné actif dans la carte eUICC, il est possible de changer d'opérateur ou de modifier l'accès à des services associés.

La spécification « SGP.22 - RSP Technical Spécification - Version 2.3 - 30 June 2021 », ci-dessous « SGP.22 », décrit notamment une solution technique de fourniture et gestion à distance des eUICCs dans des terminaux grand public (« Consumer Devices »). Les procédures décrites sont typiquement à l'initiative du terminal (incluant l'eUICC).

La spécification « SGP.02 - Remote Provisioning Architecture for Embedded UICC Technical Spécification - Version 4.2 - 07 July 2022 », ci-dessous « SGP.02 », décrit une solution technique de fourniture et gestion à distance des eUICCs intégrées aux terminaux M2M (« machine to machine »). Les procédures décrites sont typiquement à l'initiative d'un serveur, dénommé SM-DP ou SM-DP+ (pour « Subscription Manager Data Préparation »).

Des procédures typiques de gestion des eUICC comme décrites dans ces spécifications incluent, entre autres, le chargement et l'installation de profil, l'activation de profil, la désactivation de profil, la suppression de profil et d'ISD-P.

Un inconvénient de ces spécifications est qu'elles ne permettent pas la mise à jour de profils déjà installés, si ce n'est par une couteuse double procédure de suppression d'un profil existant et de chargement et installation d'un nouveau profil incorporant la mise à jour.

Des solutions classiques palliant ce manque s'appuient sur des plateformes OTA (« Over-the-air ») de l'opérateur mobile, envoyant des messages SMS (pour « Short Message Service » en anglais) à l'eUICC (via le terminal) pour mettre à jour le profil dans l'eUICC. Il est donc nécessaire que ce profil soit actif afin d'offrir la connectivité OTA, en plus de la mise en place de telles plateformes.

Le document US 2018/294949 propose une solution alternative qui s'affranchit de la plateforme OTA pour s'appuyer sur le serveur traditionnel SM-DP. Elle nécessite cependant une forte adaptation des protocoles standardisés dans la spécification SGP.22.

### RESUME DE L'INVENTION

Il existe donc un besoin de solutions techniques adaptées à la fois au mode « Consumer » et au mode « M2M », qui soient plus en adéquation avec les procédures standardisées dans SGP.02 et SGP.22.

A cet effet, l'invention concerne un procédé de mise à jour d'une carte de circuit intégré universelle, eUICC, intégrée à un terminal hôte et comportant un profil, le procédé comprenant les étapes suivantes :
recevoir, d'un serveur de préparation de données de gestion d'abonnement SM-DP, un package de profil partiel comportant un ou plusieurs éléments de profil de mise à jour, et
traiter, par l'eUICC, le package de profil partiel pour mettre à jour le ou les éléments de profil au sein dudit profil,
caractérisé en ce que le package de profil partiel est reçu via une fonction (ou commande) de mise à jour d'éléments de profil distincte de la fonction LoadProfileElements définie dans la spécification SGP.22 « RSP Technical Spécification - Version 2.3 - 30 June 2021 » et de la fonction DownloadAndlnstallation définie dans la spécification SGP.02 « Remote Provisioning Architecture for Embedded UICC Technical Spécification - Version 4.2 - 07 July 2022 » ou via une fonction (ou commande) de chargement distincte de la fonction LoadBoundProfilePackage définie dans la spécification SGP.22. L'emploi de fonctions distinctes des fonctions classiques pour le chargement et l'installation d'un profil permet à l'eUICC d'identifier, sans équivoque, que le package de profil reçu concerne une mise à jour de profil et non une opération classique d'installation de profil. L'eUICC peut alors mettre en oeuvre une routine dédiée à la mise à jour de profil.

L'usage d'une fonction dédiée permet de conserver le reste des protocoles traditionnels de chargement des éléments de profil jusqu'à l'ISD-P, comme définis dans les spécifications SGP.02 et SGP.22. Par exemple, le package de profil partiel peut être transmis dans un package de profil lié (ou Bound Profile package dans SGP.22).

Des caractéristiques optionnelles de modes de réalisation de l'invention sont définies dans les revendications dépendantes.

Dans un mode de réalisation, le package de profil partiel est codé, au sein d'un package de profil lié reçu du serveur SM-DP, sous forme de commandes (ou segments) type-longueur-valeur, TLV, dont le type est différent de `86'. Cela permet, au serveur SM-DP, d'indiquer directement à l'ISD-P cible une mise à jour en conservant le protocole classique d'installation, à savoir, pour le mode « Consumer », la séquence d'une commande TLV en clair correspondant à la fonction InitialiseSecureChannel, suivie de commandes TLV `87' correspondant à la fonction ConfigurelSDP, suivies de commandes TLV `88' correspondant à la fonction StoreMetadata, suivies de commandes TLV '87' optionnelles correspondant à la fonction ReplaceSessionKeys, suivies des commandes TLV de mise à jour codant le package de profil partiel (ses PEs de mise à jour).

Dans un autre mode de réalisation, le package de profil partiel est reçu du serveur SM-DP par un assistant local de profil du terminal hôte, LPAd, qui transfère le package de profil partiel à l'eUICC à l'aide d'une fonction de chargement distincte de la fonction LoadBoundProfilePackage définie dans la spécification SGP.22 « RSP Technical Spécification - Version 2.3 - 30 June 2021 ».

Selon un mode de réalisation, l'assistant LPAd détermine qu'un package de profil reçu est un package de profil partiel par la détection d'un indicateur de mise à jour dans au moins l'un parmi :
des métadonnées de profil (Profile Metadata) en clair au sein d'un package de profil lié codant ledit package de profil partiel reçu,
un code entré par un utilisateur du terminal hôte et initiant une opération d'obtention du package de profil reçu,
un événement obtenu d'un serveur distant et initiant une opération d'obtention du package de profil reçu.

Dans un autre mode de réalisation, à détection de la fonction de mise à jour ou de chargement distincte, l'eUICC exécute une routine de mise à jour du profil à partir du package de profil partiel reçu, distincte d'une routine d'installation d'un profil dans l'eUICC. Aussi, l'eUICC, ici l'ISD-P cible, adopte un fonctionnement différent (de celui pour l'installation de profil) à détection de la fonction dédiée à la mise à jour de profil.

Dans un autre mode de réalisation, la routine de mise à jour du profil met en oeuvre une ou plusieurs règles parmi :
lorsqu'un élément de profil non vide dudit package est déjà présent dans ledit profil de l'eUICC, mettre à jour l'élément de profil de l'eUICC déjà présent avec le contenu dudit élément de profil du package de profil partiel,
lorsqu'un élément de profil non vide dudit package est absent dudit profil de l'eUICC, ajouter l'élément de profil du package de profil partiel audit profil de l'eUICC,
lorsqu'un élément de profil vide dudit package de profil partiel est déjà présent dans ledit profil de l'eUICC, supprimer l'élément de profil déjà présent dudit profil de l'eUICC.

L'invention concerne aussi une carte de circuit intégré universelle, eUICC, intégrable à un terminal hôte et comportant un profil, l'eUICC comprenant un processeur configuré pour recevoir, d'un serveur de préparation de données de gestion d'abonnement SM-DP, un package de profil partiel comportant un ou plusieurs éléments de profil de mise à jour, et traiter le package de profil partiel pour mettre à jour le ou les éléments de profil au sein dudit profil, caractérisé en ce que
le package de profil partiel est reçu via une fonction de mise à jour d'éléments de profil distincte de la fonction LoadProfileElements de SGP.22 et de la fonction DownloadAndlnstallation de SGP.02 ou via une fonction (ou commande) de chargement distincte de la fonction LoadBoundProfilePackage de SGP.22.

Les caractéristiques décrites ci-dessus en lien avec le procédé sont transposables à la carte eUICC.

Un système peut comprendre une telle carte eUICC et un terminal hôte intégrant ladite carte eUICC.

L'invention vise aussi un support d'informations lisible par un microprocesseur, comprenant des instructions d'un programme d'ordinateur pour mettre en oeuvre le procédé défini plus haut, lorsqu'elles sont chargées et exécutées par le microprocesseur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le support d'information peut être n'importe quelle entité ou dispositif capable de stocker le programme. Par exemple, le support peut comprendre un moyen de stockage, tel qu'une ROM, par exemple une ROM de microcircuit, ou encore un moyen d'enregistrement magnétique, par exemple un disque dur, ou encore une mémoire flash.

D'autre part, le support d'information peut être un support transmissible tel qu'un signal électrique ou optique, qui peut être acheminé via un câble électrique ou optique, par radio ou par d'autres moyens. Le programme peut en particulier être téléchargé sur une plateforme de stockage d'un réseau de type Internet, de type communication, ou bien de type télécommunication.

Alternativement, le support d'information peut être un circuit intégré dans lequel le programme est incorporé, le circuit étant adapté pour exécuter ou pour être utilisé dans l'exécution du ou des procédés en question.

### BREVE DESCRIPTION DES FIGURES

D'autres particularités et avantages de l'invention apparaîtront encore dans la description ci-après, illustrée par les figures ci-jointes qui en illustrent des exemples de réalisation dépourvus de tout caractère limitatif. Sur les figures :
- la **Figure 1** illustre, de façon schématique, une structure d'un système pour la gestion de profils dans une eUICC intégrée à un terminal hôte utilisateur, tel qu'il ressort de la norme SGP.22 (mode Consumer) ;
- la **Figure 1a** illustre la communication d'un package de profil à installer en mode Consumer avec un assistant LPAd dans le terminal utilisateur ;
- la **Figure 2** illustre, à l'aide d'un ordinogramme, une réalisation de l'invention selon certains modes de réalisation ;
- la **Figure 3** illustre un package de profil et les différents états d'un tel package entre sa génération et son chargement dans l'eUICC, tels que définis dans SGP.22 (mode Consumer) ;
- la **Figure 4** illustre, à l'aide d'un ordinogramme, un exemple de routine de mise à jour d'un profil mis en oeuvre par un ISD-P cible lors du traitement d'un package de profil partiel reçu, selon des modes de réalisation de l'invention ; et
- la **Figure 5** et la **Figure 5a** illustrent des échanges de message pour la mise à jour d'un profil d'eUICC selon des modes de réalisation de l'invention.

### DESCRIPTION DETAILLEE DE L'INVENTION

La présente invention s'intéresse à la gestion d'éléments sécurisés tels que des eUICC, et notamment à la gestion de profils d'abonnés dans ces eUICC.

Un élément sécurisé, dénoté SE, est un composant ou plate-forme matérielle inviolable (typiquement une puce) utilisée dans un terminal hôte et capable d'héberger, de façon sûre, des applications et des données en conformité avec des règles et des exigences de sécurité fixées par des autorités de confiance.

Parmi les trois facteurs de forme d'un SE, l'UICC définit une puce physique qui contient l'application authentifiant un utilisateur dans un réseau de téléphonie mobile pour accéder à des services (voix, données, etc.). A cet effet, elle contient des applications telles que l'application USIM (Universal Subscriber Identity Module - ou module d'identité d'abonné universel) détenant les informations d'identification de l'abonné et permettant son authentification dans le réseau mobile.

Une eUICC est une puce UICC qui est intégrée, de façon amovible ou soudée, dans un terminal hôte. Il a été envisagé des mécanismes permettant de gérer, de façon sécurisée, différents abonnements au sein de la même carte eUICC comme décrits dans les spécifications SGP.02 pour le mode M2M et SGP.22 pour le mode Consumer.

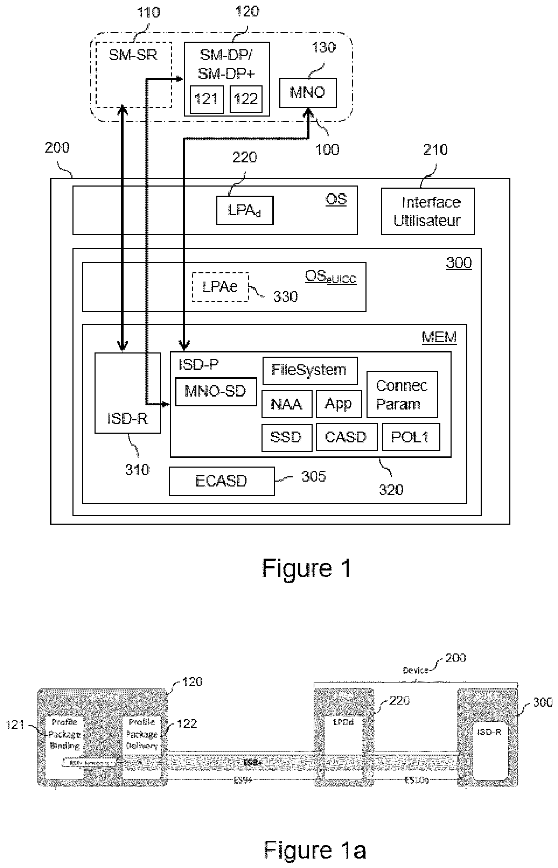

La **Figure 1** illustre, de façon schématique, une structure d'un système pour la gestion de profils dans une eUICC intégrée à un terminal hôte utilisateur, tel qu'il ressort de la norme SGP.22 (mode Consumer). Le mode M2M s'appuie sur une architecture similaire dans laquelle cependant les modules LPA (intermédiaires principalement dédiés à des interactions avec l'utilisateur final) ne sont pas mis en oeuvre puisque les opérations sont initiées par les serveurs.

Un réseau de téléphonie mobile 100 est illustré, correspondant par exemple à un opérateur de téléphonie mobile MNO (pour « Mobile Network Operator »). De façon connue, plusieurs réseaux peuvent coexister, correspondant à plusieurs opérateurs et ainsi plusieurs profils sur les terminaux utilisateurs.

Le réseau de téléphonie mobile 100 comporte une unité de routage sécurisé SM-SR 110 d'un serveur de gestion d'abonnement SM (non représenté pour une meilleure lisibilité), une unité de préparation de données SM-DP 120 d'un (même) serveur de gestion d'abonnement et des serveurs 130 propres à l'opérateur MNO gérant ce réseau de téléphonie mobile. Les fonctions principales, bien connues, de ces unités/serveurs sont décrites par la suite. Bien que les serveurs SM-SR et SM-DP soient représentés séparés, ils peuvent être mis en oeuvre au sein d'un même serveur (dénoté SM-DP+). La présente invention s'applique également à d'autres architectures de réseau de téléphonie mobile.

Un serveur SM-DP+ 120 comprend, de façon simplifiée, une fonction de génération de package de profil 121 (Profile Package Binding) et une fonction de fourniture de package de profil 122 (Profile Package Delivery). Dans le cas d'un serveur SM-DP accompagné d'un serveur SM-SR, la fonction de fourniture de package de profil est réalisée par le serveur SM-SR.

Un terminal utilisateur 200, par exemple un téléphone portable, un smartphone, un ordinateur, une tablette, etc., comporte une carte eUICC 300 pour accéder de façon sécurisée aux services du réseau mobile 100.

Sur la figure, seul un terminal utilisateur 200 embarquant une carte eUICC est représenté. Bien entendu, le réseau de téléphonie mobile inclut généralement une pluralité de tels terminaux mobiles équipés de cartes eUICC (ou SIM, UICC). La présente description s'intéresse aux cartes eUICC à titre d'exemple. D'une façon générale, la présente invention peut être mise en oeuvre dans tout type d'élément sécurisé SE contenant une pluralité de profils d'abonné, par exemple des éléments sécurisés embarqués, ou « eSE ».

Le terminal utilisateur 200 comporte un système d'exploitation OS apte à contrôler une interface de communication (non représentée) avec le réseau mobile et à réaliser l'interfaçage entre cette interface de communication et la carte eUICC 300, ainsi qu'une interface utilisateur (clavier, écran, etc.) 210 permettant à un utilisateur (dans le mode Consumer notamment) d'interagir.

Dans un mode de réalisation relatif au mode Consumer, l'OS comporte un assistant local de profil, LPAd, 220 offrant des services de gestion des profils. A titre d'exemple, ces services peuvent inclure un service de découverte locale de profil (LDS pour « Local Discovery Service ») pour connaître les profils P présents dans l'eUICC 300 et leur état actif ou inactif, un service de chargement de profil local (LPD pour « Local Profile Download ») pour réaliser les opérations séquentielles de chargement ou mise à jour d'un profil P et un service d'interface utilisateur local (LUI pour « Local User Interface ») pour récupérer/acquérir les actions de management de profils initiées localement par l'utilisateur (chargement, activation, désactivation, ...).

Dans un autre mode de réalisation relatif au mode « Consumer », l'assistant local de profil est embarqué dans l'eUICC. Il est alors dénommé LPAe (référence 330 en pointillés).

La carte eUICC 300 comprend un système d'exploitation OS_{eUICC} (stocké en mémoire non-volatile type morte ou flash par exemple) couplé à une mémoire non volatile MEM. Le système d'exploitation met en oeuvre des fonctions (non représentées) dans le domaine télécom (Telecom framework) et pour la gestion des profils, typiquement un interpréteur de package de profile (Profile Package Interpréter) et un moteur de politique de profil (Profile Policy Enabler). D'autres composants classiques présents dans la carte eUICC sont ici non représentés pour des raisons de clarté : interface (et contrôleur associé) de communication avec le terminal hôte, mémoire vive, bus de donnés, processeur, etc.

Conformément aux standards susvisés, la carte eUICC 300 comprend, en mémoire non volatile MEM, plusieurs domaines de sécurité pour la gestion de la carte et de profils d'abonné, chaque domaine de sécurité étant identifié par un AID (Application Identifier) unique:
un domaine de sécurité d'autorité de contrôle de l'eUICC 305 (ECASD pour « Embedded UICC Controlling Authority Security Domain ») responsable du stockage sécurisé d'informations d'identification (credentials) nécessaires aux domaines de sécurité de l'eUICC ;
un domaine racine ou privilégié de sécurité d'émetteur 310 (ISD-R pour « Issuer Security Domain - Root ») défini, à la fabrication de l'eUICC, comme représentatif du propriétaire de la carte 300 et donc accessible (via un jeu de clés cryptographiques particulier) uniquement par lui. Dans le mode Consumer, l'ISD-R 310 comporte des services LPA aptes à établir un dialogue avec l'assistant LPAd 220 ou LPAe 330 ;
un ou plusieurs domaines de sécurité de profil 320 (ISD-P pour « Issuer Security Domain - Profile ») généralement dédiés chacun à un opérateur MNO. Chaque domaine ISD-P est un conteneur sécurisé (protégé par un jeu de clés cryptographiques notamment) prévu pour stocker, de façon sécurisée, un unique profil d'abonné P associé à une souscription de service auprès de l'opérateur MNO correspondant et pour permettre son accès. L'un des ISD-P peut comprendre un profil initial par défaut (dit « provisioning profile ») permettant une connectivité réseau avec l'unité SM-SR 110. Le profil d'abonné est identifié par un identifiant unique ICCID (pour « Integrated Circuit Card IDentifier »).

L'ISD-P comporte une routine utilisée pour le téléchargement et l'installation du profil en collaboration avec l'interpréteur de package de profil pour le décodage et l'interprétation d'un package de profil à installer, reçu dans un canal sécurisé (par exemple selon SCP03t). Un package de profil est notamment conforme à la spécification Trusted Connectivity Alliance : « eUICC Profile Package : Interoperable Format Technical Spécification », Version 3.2, dite « spécification TCA » dans la suite du document.

De façon connue, un profil de communication P comporte des données de souscription (par exemple un identifiant IMSI, des clés cryptographiques, des algorithmes d'authentification et application NAA d'accès au réseau, etc.) et peut comporter en outre un système de fichiers, des applications App, et/ou des règles d'exécution prédéterminées.

Selon les standards susvisés, un profil est composé de composants de profil (Profile Components) incluant :
un MNO-SD (domaine de sécurité de l'opérateur) comportant des clés OTA de l'opérateur pour permettre l'établissement d'un canal OTA sécurisé,
des domaines de sécurité supplémentaires (SSD) et d'un domaine de sécurité CASD,
d'applications/applets (App),
d'au moins une application d'accès réseau (NAA pour « Network Access Application »),
d'un système de fichier (File system),
de métadonnées de profil (Profile Metadata) incluant notamment des paramètres de connectivité (Connec Param) et des règles de politique de profil (POL1 par exemple). Ces métadonnées peuvent notamment inclure un identifiant ICCID (pour « Integrated Circuit Card Identifier » ou identifiant de carte à circuit intégré) qui identifie de manière unique le profil.

Bien qu'il soit illustré un unique profile P (ISD-P), la carte eUICC 300 peut comprendre une pluralité de domaines de sécurité ISD-P et ainsi une pluralité de profils chacun pouvant être à l'état actif ou inactif. Chaque profil ou ISD-P correspondant est identifié par un ICCID.

Le domaine de sécurité racine ISD-R est privilégié en ce qu'il est notamment apte à créer ou supprimer des domaines de sécurité ISD-P dans la mémoire non volatile MEM, et à activer ou désactiver des profils P chargés dans les ISD-P 320 de l'eUICC.

De façon connue des spécifications susvisées, cette gestion est réalisée par l'échange de messages (commandes, réponses) entre l'unité SM-SR 110 (ou le SM-DP+) et le domaine racine ISD-R 310. Les différentes fonctions et commandes de gestion de l'eUICC 300 sont définies dans ces documents SGP.02 pour le mode M2M et SGP.22 pour le mode Consumer. La communication entre l'unité SM-SR 110 et l'ISD-R 310 peut être portée par le protocole http et être assurée et/ou protégée par le protocole SCP80, SCP81 ou CAT-TP.

Le chargement, la mise à jour ou la suppression de façon sécurisée des profils dans les domaines sécurisés ISD-P 320 est réalisée par l'échange de messages (commandes, réponses) entre l'unité SM-DP 120 et chaque domaine sécurisé ISD-P concerné de l'eUICC 300. L'unité SM-DP 120 prépare notamment les packages de profil à charger dans l'eUICC, puis les envoie au domaine ISD-P 320 concerné, via l'unité SM-SR 110 et l'ISD-R 310. A nouveau des messages APDU sont utilisés. La communication entre l'unité SM-DP 120 et l'ISD-P 320 (via le SM-SR 110) peut être portée par le protocole http et être protégée par le protocole SCP02 ou SCP03 ou SCP03t, elle-même « tunnelée » ou encapsulée dans le lien SM-SR - ISD-R protégé par le protocole SCP80, SCP81 ou CAT-TP.

La **Figure 1a** illustre la communication d'un package de profil à installer en mode Consumer avec un assistant LPAd 220 dans le terminal utilisateur 200. Une connexion sécurisée, libellée ES9+ dans SGP.22, est établie entre la fonction de fourniture de package de profil 122 et l'assistant LPAd 220 (ou LPAe 330 dans la variante où celui-ci est implémenté). Une seconde connexion sécurisée, libellée ES8+ dans SGP.22, est établie entre la fonction de fourniture de génération de profil 121 et l'eUICC 300, plus précisément l'ISD-R 310. La seconde connexion est « tunnelée » au sein de la connexion ES9+ et d'une troisième connexion entre l'assistant LPA et l'ISD-R 310. Les mécanismes de sécurisation des connexions par clé sont décrits dans SGP.22.

Le package de profil ainsi communiqué à l'ISD-R est transmis, dans l'eUICC, à l'ISD-P cible pour installation du profil. L'ISD-P cible est identifié par l'ICCID présent dans les métadonnées de profil.

Des mécanismes similaires sont mis en oeuvre dans le mode M2M où la communication avec le SM-DP+ ou SM-SR est réalisée, à l'initiative de ce dernier, directement avec l'ISD-P cible.

Lorsqu'un profil d'abonné P ainsi chargé est activé par le SM-SR 110 ou SM-DP+ (ou en variante par l'utilisateur via un menu sur le terminal utilisateur 200), il est équivalent à une UICC : il permet à l'utilisateur de s'identifier sur le réseau mobile 100 de l'opérateur MNO auquel il a souscrit l'abonnement correspondant au profil afin d'accéder à des services.

L'opérateur MNO 130 peut aussi accéder directement, par OTA (Over The Air - par exemple par SMS), au profil P actif (et notamment à certaines actions prévues par l'opérateur dans ce profil) pour réaliser des actions de diverses natures (notamment la gestion à distance d'un composant du profil 320, par exemple une mise à jour de données ou d'offre ou de règles d'exécution, etc.). De façon réciproque, des applications dans le profil P actif peuvent être configurées pour transmettre des données au MNO 130. Ces échanges sont illustrés sur la **figure 1** par une flèche double sens entre le MNO 130 et le profil P.

La mise à jour d'un profil dans l'eUICC (peu importe le composant de profil visé) est essentielle pour une bonne gestion des eUICCs. La communication OTA est l'unique accès permettant une mise à jour des données de profil. La communication classique depuis le serveur SM-DP 120, pour une mise à jour de profil, requiert en effet une suppression de profil suivi d'une installation d'un nouveau profil mis à jour, ce qui entraîne des communications inutiles.

La communication OTA présente cependant certains inconvénients : d'une part, elle n'est possible que pour un profil actif ; d'autre part, elle requiert l'utilisation d'une plateforme OTA dédiée, ce qui peut s'avérer coûteux pour l'opérateur.

L'invention permet de réutiliser le serveur SM-DP 120 (ou SM-DP+) traditionnellement dédié au chargement et à l'installation de nouveaux profils pour mettre à jour un profil dans l'eUICC. Elle permet de réutiliser les procédures existantes de chargement et installation de profil en limitant leur modification pour signaler qu'il s'agit d'une mise à jour. Elle s'appuie ainsi toujours sur le format de la spécification TCA des packages de profil en limitant son adaptation dans certains modes de réalisation.

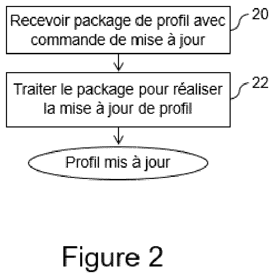

La **Figure 2** illustre, à l'aide d'un ordinogramme, une réalisation de l'invention selon certains modes de réalisation. Ceux-ci définissent de nouvelles commandes envoyées par le serveur SM-DP pour charger des éléments de profil (PE pour « Profile Element ») de mise à jour, qui sont similaires aux commandes classiques de chargement d'éléments de profil d'un nouveau profil à installer. Ainsi, en identifiant ces nouvelles commandes, l'eUICC 300 est en mesure de distinguer les packages de profil reçus concernant une mise à jour de profil de ceux concernant une opération classique d'installation de profil. L'eUICC peut alors mettre en oeuvre une routine dédiée à la mise à jour de profil.

Le serveur SM-DP 120 génère et stocke un package de profil de mise à jour pour l'eUICC concernée, par exemple celle de la **Figure 1****.** Un package de profil de mise à jour est typiquement « partiel » en ce qu'il comporte un nombre généralement réduit d'éléments de profil PE (ceux à mettre à jour) par rapport à ceux repris dans la spécification TCA.

Un package de profil partiel comporte typiquement la différence (en termes de PEs) entre un profil installé et un profil cible souhaité.

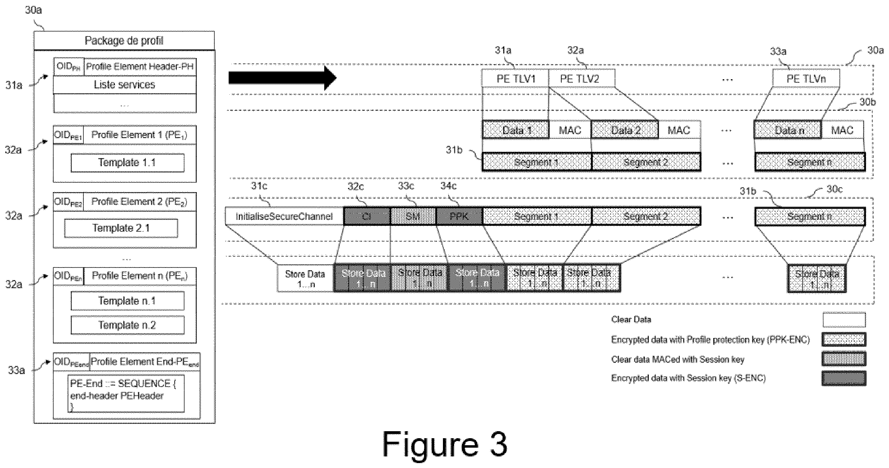

La **Figure 3** illustre un package de profil et les différents états d'un tel package entre sa génération et son chargement dans l'eUICC, tels que définis dans SGP.22 (mode Consumer).

Le contenu d'un package de profil 30a est défini dans la spécification TCA susvisée et s'applique tant au mode Consumer qu'au mode M2M. Il comporte une collection d'éléments de profil (PE) qui sont décrits, et peuvent ainsi être traités par l'eUICC, indépendamment les uns des autres. Chaque PE est encodé comme une donnée TLV (type ou tag [étiquette], longueur, valeur) et comporte un entête contenant un identifiant de PE (OID pour « Object Identifier »), un drapeau indiquant si le PE est obligatoire, un type de PE et une longueur de PE.

Un élément de profil de type entête de profile 31a (Profile Element Header ou PH) est présent avant tout autre PE pour fournir des indications sur le contenu du profil. Les autres PE 32a (PE₁, PE₂, PEₙ) décrivent par exemple les composants de profil évoqués plus haut (NAA, système de fichiers, applications, SSD, etc.). A titre illustratif, les éléments de profil suivants (liste non exhaustive) sont décrits dans la spécification TCA : PE-MF, PE-CD, PE-TELECOM, PE-USIM, PE-OPT-USIM, PE-SecurityDomain, PE-Application, PE-PINCodes. Dans le cadre de l'invention, un package de profil partiel comporte de tels PEs correspondants aux PEs à mettre à jour sur le profil cible déjà installé dans l'eUICC. Un élément de profil de fin 33a (PE End) termine le package.

La fonction 121 du SM-DP+ 120 génère ainsi un package de profil non protégé 30a constitué d'une séquence de PE TLVs.

La même fonction 121 encode ces PE TLVs à l'aide de clés (clés de session convenues avec l'eUICC ou en variante des clés aléatoires de protection par profil) en utilisant une méthode encodage-puis-MAC (Encrypt-then-MAC method), incluant donc également le calcul d'un MAC (code d'authentification de message). La spécification SGP.22 se base sur la méthode SCP03t. Un package de profil protégé 30b est ainsi obtenu, qui est découpé en segments 31b de taille fixée, chaque segment étant identifié par un type `86' selon SGP.22.

La même fonction 121 du SM-DP+ 120 conduit alors une opération visant à lier le package protégé 30b à l'eUICC particulière, grâce à un accord préalable de clés entre l'eUICC et le SM-DP+ 120. Pour ce faire, un package de profil lié 30c (ou « Bound Profile Package ») est généré pour comprendre comme suit (dans cet ordre) :
une commande TLV en clair 31c, pour l'accord de clé correspondant à la fonction InitialiseSecureChannel de la procédure de chargement et d'installation d'un profil. Cette fonction permet au SM-DP+ d'ouvrir une nouvelle session RSP (pour « Remote SIM Provisioning ») avec l'eUICC 300,
un jeu de commandes TLV encodées 32c (par exemple selon SCP03t) relatives à des données de configuration de l'ISD-P. Elles correspondent à la fonction ConfigurelSDP de la procédure de chargement et d'installation d'un profil. Ces commandes ConfigurelSDP sont identifiables par un type `87',
un jeu de commandes TLV en clair 33c relatives à des métadonnées (Profile Metadata) concernant le profil en question aux fins du gestion locale du profil. Il s'agit par exemple de données en texte simple destinées à un affichage, par l'assistant LPA, à l'utilisateur, mais également de données telles que l'ICCID du profil, des services et applications obligatoires, etc.. Elles correspondent à la fonction StoreMetadata de la procédure de chargement et d'installation d'un profil. Ces commandes StoreMetadata sont identifiables par un type `88',
un jeu optionnel de commandes TLV encodées 34c (par exemple selon SCP03t) relatives à des clés de session SCP03t. Elles correspondent à la fonction ReplaceSessionKeys de la procédure de chargement et d'installation d'un profil. Ces commandes ReplaceSessionKeys sont identifiables par un type `87' et visent à remplacer les clés de session SCP03t par un nouveau jeu de clés,
suivi des segments 31b du package de profil protégé 30b, identifiés par le type `86' selon SGP.22 dans la procédure de chargement et d'installation d'un nouveau profil. Ces segments définissent des commandes TLV correspondant à la fonction LoadProfileElements de la procédure classique de chargement et d'installation en mode « Consumer ».

Les événements déclencheurs de la mise à jour du profile de l'eUICC peuvent être multiples, notamment ceux connus pour le chargement et l'installation de nouveaux profils dès lors qu'ils visent un profil déjà chargé et installé dans l'eUICC. A titre d'exemple, un utilisateur peut scanner un QR code avec le terminal utilisateur 200 déclenchant un accès au serveur 120 (mode Consumer) ou le serveur SM-DP 120 peut lancer une campagne de mise à jour de terminaux (mode M2M). Egalement, en mode Consumer, le LPAd peut sonder un serveur de l'opérateur MNO ou d'une entité opératrice tierce tel qu'un organisme de télécommunication, comme par exemple un organisme investie d'une mission de défense d'intérêts d'opérateurs de téléphonie (exemple : organisme GSMA) et récupérer un événement EventlD indicateur d'une mise à jour, ou être simplement configuré (autoconfiguration selon un contexte particulier) pour réaliser une mise à jour de profil à l'aide d'un SM-DP+ par défaut dont l'adresse est mémorisée dans l'eUICC.

De retour à la **Figure 2****,** à l'étape 20, le terminal (incluant l'eUICC) reçoit, du serveur SM-DP 120 (ou SM-DP+), un package de profil partiel comportant un ou plusieurs éléments de profil de mise à jour. En mode Consumer, le package de profil lié 30c est reçu par l'assistant LPA (LPAd 220 ou LPAe 330 selon le cas). En mode M2M, il est reçu par l'ISD-P cible de l'eUICC.

Dans un mode de réalisation, le serveur SM-DP utilise une fonction de mise à jour d'éléments de profil distincte de la fonction LoadProfileElements de SGP.22 (pour le mode Consumer) et de la fonction DownloadAndlnstallation de SGP.02 (pour le mode M2M). LoadProfileElements et DownloadAndlnstallation sont les fonctions utilisées pour le chargement et l'installation classique d'un nouveau profil. A titre illustratif, les nouvelles fonctions de mise à jour peuvent être nommées UpdateProfileElements pour le mode Consumer et DownloadAndUpdate pour le mode M2M.

Le SM-DP+ 120 peut ainsi générer le package de profil lié 30c de telle sorte que les segments 31b du package de profil protégé 30b soient identifiés par un type différent de `86' (et de `87' et `88'), par exemple '90' identifiant ainsi la commande UpdateProfileElements ou DownloadAndUpdate. Aussi, en cas de segments typés `86', l'eUICC saura qu'il s'agit d'une installation classique de nouveau profil, alors qu'en cas de segments typés '90', elle saura qu'il y a lieu de lancer une opération de mise à jour du profil.

A l'étape 22, lorsque le package reçu est détecté comme opérant une mise à jour de profil, l'eUICC traite le package de profil partiel reçu pour mettre à jour le ou les éléments de profil au sein du profil déjà installé.

Pour ce faire, le package de profil est aiguillé depuis le LPAd 220 (ou LPAe 330) vers l'ISD-P cible en mode Consumer, typiquement par l'usage de commandes LoadBoundProfilePackage définies dans la spécification SGP.22. En mode M2M, l'ISD-P dispose directement du package de profil pour la mise à jour.

L'ISD-P peut être actif (« enabled ») ou non (« disabled ») lors de la mise à jour du profil.

De façon similaire à l'installation d'un nouveau profil, la transmission du package de profil partiel comporte l'indication du profil (ou ISD-P) cible. Dans le mode Consumer, l'ICCID du profil cible est par exemple renseigné dans les Profile Metadata accompagnant le package de profil (dans les Store Metadata 33c du package de profil lié 30c dans SGP.22). Dans le mode M2M, l'AID de l'ISD-P cible est indiqué dans le champ X-Admin-Targeted-Application du message HTTP POST transmis à l'eUICC.

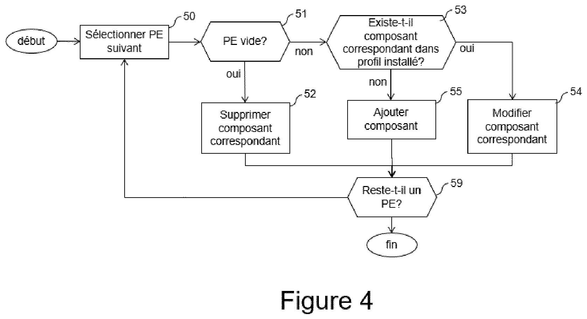

L'ISD-P détermine, grâce à l'identification de la fonction de mise à jour (type '90' des segments 31b, dans l'exemple ci-dessus), s'il s'agit d'une mise à jour de profil ou non. Dans l'affirmative, l'ISD-P bascule dans un mode « mise à jour » dans lequel il exécute une routine de mise à jour du profil P à réception du package de profil partiel, plutôt que la routine d'installation d'un nouveau profil. La **Figure 4** illustre un exemple de routine de mise à jour d'un profil.

Dans la négative, la procédure classique de chargement et d'installation de profil est mise en oeuvre.

Dans une variante de réalisation à l'usage d'une fonction distincte de LoadProfileElements et DownloadAndlnstallation, le package de profil partiel est conforme à ces fonctions (segments 31b typés `86') et est reçu par l'assistant LPAd 220. Ce dernier détermine qu'il s'agit d'un package de profil partiel pour mise à jour de profil par la détection d'un indicateur de mise à jour.

Dans un mode de réalisation, l'indicateur est présent dans les métadonnées de profil (Profile Metadata 33c) en clair au sein d'un package de profil lié codant ledit package de profil partiel reçu. Dans ce mode de réalisation, les Profile Metadata en clair (segments TLV dont le type vaut `88') comprennent un champ, spécifié par le SM-DP/SM-DP+ 120 à la génération du package, qui indique qu'il s'agit d'une mise à jour de profil. Le LPAd 220 lit ce champ.

Dans un autre mode de réalisation, l'indicateur est porté dans le QR code acquis par l'utilisateur pour initier l'opération de mise à jour, c'est-à-dire l'opération d'obtention du package de profil reçu.

Dans un autre mode de réalisation, l'indicateur est porté par l'EventID acquis auprès d'un serveur de l'opérateur MNO ou d'une entité opératrice tierce tel qu'un organisme de télécommunication, comme par exemple un organisme investie d'une mission de défense d'intérêts d'opérateurs de téléphonie (exemple : organisme GSMA) et qui initie également l'opération de mise à jour, et donc l'opération d'obtention du package de profil reçu.

Lorsque le LPAd a déterminé qu'il s'agit d'un package de profil partiel (pour mise à jour), alors il le transfère à l'eUICC (l'ISD-P cible via l'ISD-R) à l'aide d'une fonction de chargement distincte de la fonction LoadBoundProfilePackage définie dans la spécification SGP.22 pour le chargement et l'installation de profil. Dans ce cas, l'ISD-P cible reçoit à l'étape 20 le package de profil partiel et, reconnaissant la fonction de chargement distincte, sait désormais qu'il s'agit d'une opération de mise à jour de profil.

L'ISD-P cible peut alors traiter le package de profil partiel reçu pour mettre à jour (étape 22) le ou les éléments de profil au sein du profil déjà installé. La routine de la **Figure 4** est alors mise en oeuvre.

Lorsque la mise à jour de profil est réalisée alors que l'ISD-P du profil cible est inactif (« disabled »), l'ISD-P peut, suite à la mise à jour de son profil, être passé à l'état actif (« enabled ») de sorte à pouvoir profiter du profil mis à jour.

La **Figure 4** illustre, à l'aide d'un ordinogramme, un exemple de routine de mise à jour d'un profil mis en oeuvre par un ISD-P cible lors du traitement d'un package de profil partiel reçu. Le traitement concerne ici les éléments de profil PEs de mise à jour une fois décodés (SCP03t), c'est-à-dire ceux contenus dans le package à l'exception du Profile Element Header PH et de l'élément de fin PE End.

Un élément de profil PE décrit dans le package est considéré comme vide s'il ne comporte que son entête (OID, champ optionnel indiquant s'il est obligatoire, type du PE, longueur du PE), sans contenu utile comme défini dans la spécification TCA. Le package peut donc comprendre un ou plusieurs PEs à traiter.

A l'étape 50, le PE suivant est sélectionné (dans l'ordre de déclaration au sein du package).

A l'étape 51, l'ISD-P vérifie si le PE sélectionné est vide ou non. Dans l'affirmative, le PE de même type (PE Type dans l'entête) est supprimé, à l'étape 52, du profil cible déjà installé. Ainsi, une première règle consiste, lorsqu'un élément de profil vide du package reçu est déjà présent dans le profil déjà installé (et donc à mettre à jour), à supprimer cet élément de profil déjà présent dans le profil de l'eUICC.

Suite à l'étape 52, la routine se poursuit à l'étape 59 qui détermine s'il reste un PE à traiter. Dans l'affirmative, la routine retourne à l'étape 50 pour sélectionner le PE suivant. Sinon, la routine prend fin.

Dans la négative du test 51 (PE sélectionné non vide), il est déterminé à l'étape 53 si le profil installé dans l'ISD-P comporte un PE du même type que le PE sélectionné.

Dans l'affirmative, le PE de même type au sein du profil installé est mis à jour, à l'étape 54, en remplaçant son contenu par le contenu du PE sélectionné. Ce remplacement peut être réalisé par la suppression du composant de profil correspondant puis par l'installation à nouveau de ce composant à partir du PE sélectionné. En variante, des valeurs du composant de profil déjà installé sont modifiées par des valeurs présentes dans le PE sélectionné (du package reçu) sans suppression intermédiaire du composant de profil.

Ainsi, une deuxième règle consiste, lorsqu'un élément de profil non vide du package reçu est déjà présent dans le profil installé, à mettre à jour l'élément de profil déjà présent avec le contenu de l'élément de profil du package.

Suite à l'étape 54, la routine se poursuit à l'étape 59 déjà décrite.

Dans la négative du test 53, le PE sélectionné définit un nouveau composant de profil à installer. Aussi, ce nouveau composant de profil est installé, à l'étape 55, dans le profil déjà existant, à partir du PE sélectionné.

Ainsi, une troisième règle consiste, lorsqu'un élément de profil non vide du package reçu est absent du profil déjà installé, à ajouter l'élément de profil du package au profil déjà existant.

Suite à l'étape 55, la routine se poursuit à l'étape 59 déjà décrite.

Grâce à cette routine, le ou les différents PEs de mise à jour contenus dans le package reçu sont traités successivement pour mettre à jour, de façon incrémentale, le profil déjà existant dans l'ISD-P, soit par suppression, soit par ajout, soit par modification d'un ou plusieurs composants de profil correspondant au PE ou PEs de mise à jour.

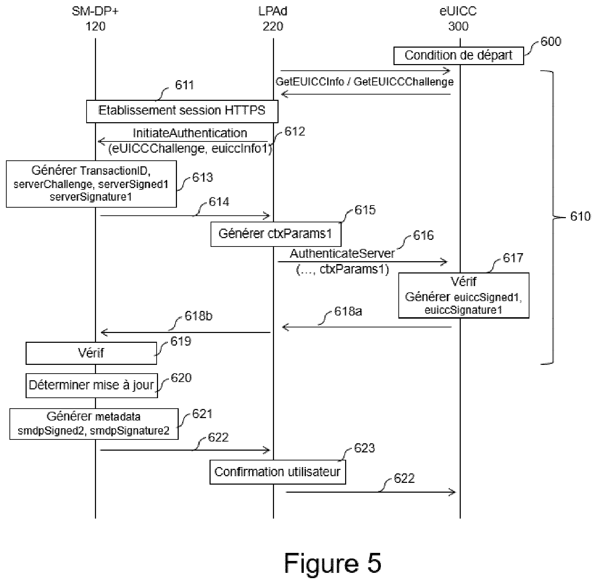

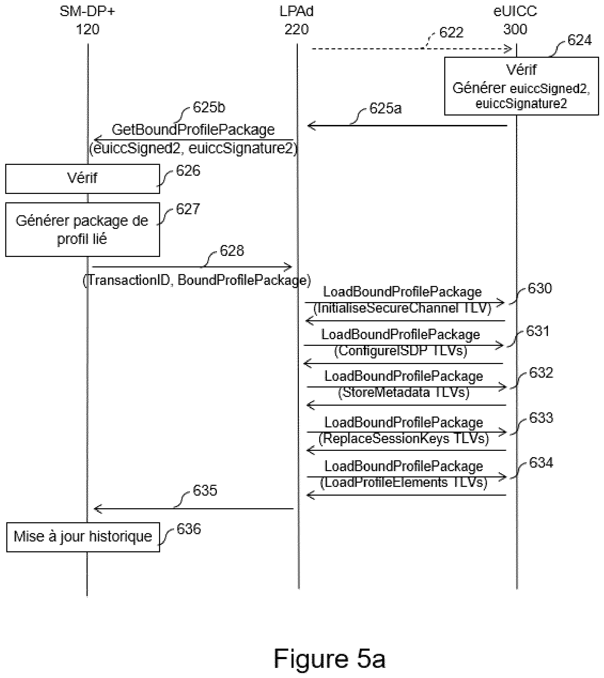

La **Figure 5** et la **Figure 5a** illustrent des échanges de message pour la mise à jour d'un profil d'eUICC selon des modes de réalisation de l'invention. Ces échanges s'appuient sur les procédures décrites dans SGP.22 pour le chargement et l'installation d'un nouveau profil en mode Consumer. Certains échanges non utiles à l'invention (notamment entre l'opérateur MNO 130 et le SM-DP/SM-DP+ 120) sont volontairement omis afin de simplifier l'illustration.

Les entités impliquées dans cette illustration sont le serveur SM-DP/SM-DP+ 120, l'assistant LPAd 220 du terminal utilisateur 200 et l'eUICC 300. Les détails de communication au sein de l'eUICC sont donc omis, notamment entre l'ISD-R (communiquant avec le LPAd) et l'ISD-P cible réalisant la mise à jour de son profil. Les enseignements décrits ci-après s'appliquent également à un assistant LPAe 330 au sein de l'eUICC, mais également au mode M2M dans lequel le package de profil est directement reçu par l'ISD-P cible (pas d'intervention d'un module LPA). Les échanges de messages correspondant au mode M2M sont décrits en sections 3.1.2 (pour l'authentification) et 3.1.3 (pour le chargement et l'installation d'un profil) de SGP.02.

Une condition de départ est détectée à l'étape 600. SGP.22 indique différentes conditions de départ possibles. Si un code d'activation est utilisé, celui-ci est fourni à l'assistant LPAd par l'utilisateur, typiquement par saisie manuelle ou scan d'un QR code. Le code d'activation peut renseigner un profil cible ou en variante renseigner une mise à jour de profil, en plus de l'adresse du serveur SM-DP+ 120. Une autre condition de départ peut consister pour le LPAd à solliciter un serveur SM-DS auprès duquel il récupère une adresse du SM-DP+ 120 ainsi qu'un événement (EventID).

L'étape 600 déclenche ainsi une procédure d'authentification mutuelle 610 du LPAd avec le serveur SM-DP+ 120. Elle comporte l'établissement 611 d'une nouvelle session HTTPs en mode d'authentification de serveur, entre les deux entités, puis l'appel de la fonction InitiateAuthentification 612 permettant de passer un challenge et des informations d'eUICC (obtenus auprès de l'eUICC) au serveur SM-DP+. Ce dernier génère 613 alors un identifiant de transaction (TransactionID) identifiant la session RSP pour l'ensemble de la procédure de mise à jour. Il génère aussi un ensemble de données cryptographiques (serverChallenge, serverSigned1, serverSignature1), et transmet l'ensemble (incluant le Transaction ID) au LPAd à l'étape 614.

En réponse, le LPAd génère 615 une structure de données ctxParams1 comportant notamment un champ MatchinglD renseignant le code d'activation ou l'EventID mentionné plus haut. Celle-ci et les données cryptographiques reçues sont transmises 616 à l'eUICC pour vérification et génération 617 de données cryptographiques d'eUICC, incluant une structure signée euiccSigned1 comprenant les données suivantes TransactionID, ctxParams1, serverChallenge et des données eUICCInfo2 de l'eUICC, ainsi qu'une génération d'une signature euiccSignature1 basée sur la structure signée euiccSigned1 générée.

Les données cryptographiques d'eUICC sont retournées 618a au LPAd puis transmises 618b au serveur SM-DP+ 120 comme paramètre d'un appel à la fonction AuthenticateClient.

Le serveur SM-DP+ 120 vérifie 619 ces données afin de conclure l'authentification mutuelle. A ce stade, le serveur SM-DP+ connaît donc le MatchinglD (code d'activation ou l'EventID) correspondant à l'opération souhaitée pour l'eUICC.

Suite à une authentification 610 réussie, le SM-DP+ 120 détermine 620, à partir du MatchinglD, qu'une mise à jour de profil est sollicitée. Le MatchinglD peut directement renseigner un événement correspondant à une mise à jour de profil, par exemple un identifiant de package de profil partiel de mise à jour. En variante, le MatchinglD peut correspondre à un profil, auquel cas le SM-DP+ 120 détermine si ce profil est déjà installé dans l'eUICC impliquée dans une version antérieure (à l'aide de données historiques), auquel cas un package de profil partiel de mise à jour doit être envoyé à l'eUICC.

Le SM-DP+ 120 génère 621 et échange 622 à nouveau des données cryptographiques (smdpSigned2, smdpSignature2) avec l'eUICC, via le LPAd. Si une confirmation de l'utilisateur est nécessaire, des metadata de profil sont également générées à l'étape 621 et transmises 622 au LPAd qui affiche 623 une demande de confirmation, voire de saisie d'un code de confirmation, à l'utilisateur pour la poursuite de la procédure.

L'eUICC, plus précisément l'ISD-P, vérifie 624 les données cryptographiques reçues pour en déduire (ou générer) des clés de la session RSP et générer des données cryptographiques d'eUICC en retour (euiccSigned2, euiccSignature2). La donnée euiccSigned2 peut inclure la réponse de l'utilisateur (notamment dans le cas d'un code de confirmation saisi par celui-ci). Ces données cryptographiques d'eUICC sont retournées 625a au LPAd puis transmises 625b au serveur SM-DP+ 120 comme paramètre d'un appel à la fonction GetBoundProfilePackage destinée à récupérer le package de profil lié 30c correspondant à la mise à jour du profil.

Le serveur SM-DP+ 120 vérifie 626 ces données afin de conclure à une confirmation de chargement. Le code de confirmation peut notamment être vérifié par rapport à un code de référence.

En cas de confirmation, le serveur SM-DP+ 120 génère 627 le package de profil lié 30c comme décrit plus haut, en y intégrant les PEs qui doivent être mis à jour. Dans un mode de réalisation, les segments 31b sont identifiés par une type '90' (ou équivalente) afin d'identifier les commandes TLV comme des commandes de mise à jour.

Le package de profil lié 30c est transmis 628 au LPAd en réponse à la commande GetBoundProfilePackage.

La procédure se poursuit par l'installation de la mise à jour. Pour ce faire, le LPAd charge les commandes TLV successives dans l'eUICC (l'ISD-P) à l'aide de la fonction LoadBoundProfilePackage définie dans SGP.22.

Les commandes expliquées en lien avec la Figure 3 sont successivement transmises.

Aussi, la commande TLV en clair 31c, pour l'accord de clé correspondant à la fonction InitialiseSecureChannel, est d'abord transmise 630, permettant à l'ISD-P d'obtenir les clés de session RSP.

Le LPAd transmet 631 ensuite les commandes TLV 32c relatives aux données de configuration de l'ISD-P (fonction ConfigurelSDP) par un ou plusieurs appels à la fonction LoadBoundProfilePackage.

Puis le LPAd transmet 632 les commandes TLV en clair 33c relatives aux métadonnées de profil (fonction StoreMetadata) par un ou plusieurs appels à la fonction LoadBoundProfilePackage.

Puis, le LPAd transmet 633 les commandes TLV 34c relatives aux clés de session (fonction ReplaceSessionKeys) si présentes, par un ou plusieurs appels à la fonction LoadBoundProfilePackage.

Enfin, le LPAd transmet 634 les segments 31b relatifs au package de profil (fonction LoadProfileElements ou en variante UpdateProfileElements) par un ou plusieurs appels à la fonction LoadBoundProfilePackage.

L'ISD-P cible identifie, grâce à la fonction de mise à jour transmettant le package de profil partiel (tag '90' des segments 31b), qu'il s'agit d'une mise à jour de profil et exécute alors la routine de mise à jour (par exemple **Figure 5**) comme exposé ci-dessus.

Si tous les PEs sont traités avec succès, la réponse au dernier appel LoadBoundProfilePackage contient un résultat positif de la mise à jour de profil, lequel est remonté 635 au serveur SM-DP+ 120. Ce dernier peut alors mettre à jour 636 ses bases de données des profils installés (notamment leurs versions) pour l'eUICC. Cela clôt la procédure de mise à jour.

Cet exemple de la **Figure 5** et de la **Figure 5a** basé sur SGP.22 prévoit une séquence d'une commande TLV en clair correspondant à la fonction InitialiseSecureChannel, suivie de commandes TLV `87' correspondant à la fonction ConfigurelSDP, suivies de commandes TLV en clair `88' correspondant à la fonction StoreMetadata, suivies de commandes TLV '87' optionnelles correspondant à la fonction ReplaceSessionKeys, suivies des commandes TLV de mise à jour (avec par exemple le tag '90') codant le package de profil partiel (ses PEs de mise à jour) sous forme encodée (SCP03t).

Les mêmes enseignements sont applicables au protocole de SGP.02, la séquence de commandes pour la procédure de chargement et d'installation d'un profil (adaptée à la mise à jour selon l'invention) comprenant : des commandes TLV `84' correspondant à la fonction Initialize Update de SGP.02, suivies de commandes TLV `85' correspondant à la fonction External Authenticate, suivies de commandes TLV avec par exemple le tag '90' (au lieu de `86', afin d'identifier la mise à jour de profil) encapsulant le package de profil partiel (ses PEs de mise à jour) sous forme encodée (SCP03t).

Par ailleurs, l'exemple de la **Figure 5** et de la **Figure 5a** est basé sur une commande TLV différente de LoadProfileElements et DownloadAndlnstallation, mais en utilisant la fonction LoadBoundProfilePackage lorsque le LPAd 220 transmet le package de profil partiel à l'eUICC (ISD-P cible). En variante comme décrite plus haut, les fonctions classiques LoadProfileElements et DownloadAndlnstallation peuvent être utilisées et le LPAd 220 transmet le package de profil partiel à l'eUICC (ISD-P cible) en utilisant une fonction distincte de la fonction classique LoadBoundProfilePackage.

Les exemples qui précèdent ne sont que des modes de réalisation de l'invention qui ne s'y limite pas.

## Revendications

1. Procédé de mise à jour d'une carte de circuit intégré universelle, eUICC, (300) intégrée à un terminal hôte (200) et comportant un profil (320), le procédé comprenant les étapes suivantes :
recevoir (20), d'un serveur de préparation de données de gestion d'abonnement SM-DP (120), un package de profil partiel (30a) comportant un ou plusieurs éléments de profil de mise à jour (32a), et
traiter (22), par l'eUICC, le package de profil partiel pour mettre à jour le ou les éléments de profil au sein dudit profil,
**caractérisé en ce que** le package de profil partiel est reçu via une fonction de mise à jour d'éléments de profil distincte de la fonction LoadProfileElements définie dans la spécification SGP.22 « RSP Technical Spécification - Version 2.3 - 30 June 2021 » et de la fonction DownloadAndlnstallation définie dans la spécification SGP.02 « Remote Provisioning Architecture for Embedded UICC Technical Spécification - Version 4.2 - 07 July 2022 » ou via une fonction de chargement distincte de la fonction LoadBoundProfilePackage définie dans la spécification SGP.22.

2. Procédé selon la revendication 1, dans lequel le package de profil partiel (30a) est codé, au sein d'un package de profil lié (30c) reçu du serveur SM-DP, sous forme de commandes type-longueur-valeur, TLV, (31b) dont le type est différent de `86'.

3. Procédé selon la revendication 1 ou 2, dans lequel le package de profil partiel est reçu du serveur SM-DP par un assistant local de profil du terminal hôte, LPAd, qui transfère le package de profil partiel à l'eUICC à l'aide d'une fonction de chargement distincte de la fonction LoadBoundProfilePackage définie dans la spécification SGP.22 « RSP Technical Spécification - Version 2.3 - 30 June 2021 ».

4. Procédé selon la revendication 3, dans lequel l'assistant LPAd détermine qu'un package de profil reçu est un package de profil partiel par la détection d'un indicateur de mise à jour dans au moins l'un parmi :
des métadonnées de profil en clair au sein d'un package de profil lié codant ledit package de profil partiel reçu,
un code entré par un utilisateur du terminal hôte et initiant une opération d'obtention du package de profil reçu,
un événement obtenu d'un serveur distant et initiant une opération d'obtention du package de profil reçu.

5. Procédé selon l'une des revendications 1 à 4, dans lequel à détection de la fonction de mise à jour ou de chargement distincte, l'eUICC exécute une routine de mise à jour du profil à partir du package de profil partiel reçu, distincte d'une routine d'installation d'un profil dans l'eUICC.

6. Procédé selon la revendication 5, dans lequel la routine de mise à jour du profil met en oeuvre une ou plusieurs règles parmi :
lorsqu'un élément de profil non vide dudit package est déjà présent dans ledit profil de l'eUICC, mettre à jour l'élément de profil de l'eUICC déjà présent avec le contenu dudit élément de profil du package de profil partiel,
lorsqu'un élément de profil non vide dudit package est absent dudit profil de l'eUICC, ajouter l'élément de profil du package de profil partiel audit profil de l'eUICC,
lorsqu'un élément de profil vide dudit package de profil partiel est déjà présent dans ledit profil de l'eUICC, supprimer l'élément de profil déjà présent dudit profil de l'eUICC.

7. Carte de circuit intégré universelle, eUICC, (300) intégrable à un terminal hôte (200) et comportant un profil (320), l'eUICC comprenant un processeur configuré pour recevoir, d'un serveur de préparation de données de gestion d'abonnement SM-DP (120), un package de profil partiel (30a) comportant un ou plusieurs éléments de profil de mise à jour (32a), et traiter le package de profil partiel pour mettre à jour le ou les éléments de profil au sein dudit profil, **caractérisé en ce que** :
le package de profil partiel est reçu via une fonction de mise à jour d'éléments de profil distincte de la fonction LoadProfileElements définie dans la spécification SGP.22 « RSP Technical Spécification - Version 2.3 - 30 June 2021 » et de la fonction DownloadAndlnstallation définie dans la spécification SGP.02 « Remote Provisioning Architecture for Embedded UICC Technical Spécification - Version 4.2 - 07 July 2022 » ou via une fonction de chargement distincte de la fonction LoadBoundProfilePackage définie dans la spécification SGP.22.

8. Système comprenant une carte eUICC (300) selon la revendication 5 et un terminal hôte (200) intégrant ladite carte eUICC.

9. Support d'informations lisible par un microprocesseur, comprenant des instructions d'un programme d'ordinateur pour mettre en oeuvre le procédé selon l'une des revendications 1 à 6, lorsqu'elles sont chargées et exécutées par le microprocesseur.
